# FASCICULE DE BREVET EUROPEEN

(11) **EP 0 347 308 B1**
(45) Date de publication et mention de la délivrance du brevet: **20.01.1993**
(21) Numéro de dépôt: 89401645.0
(22) Date de dépôt: 13.06.1989
(51) Int. Cl.: A23C 19/05, A23C 19/028, A23C 19/068

(54) **Procédé pour conférer des aptitudes fromagères à des laits surchauffés, en vue de la fabrication de fromages emprésurés**
Verfahren, um überhitzte Milch zur Herstellung von fermentiertem Käse geeignet zu machen
Process for confering the aptitude of cheese forming to overheated milk for preparing renneted cheese

(30) Priorité: 14.06.1988 FR 8807932
(43) Date de publication de la demande: 20.12.1989
(73) Titulaire: Roquette Frères, F-62136 Lestrem (FR)
(72) Inventeur: Serpelloni, Michel, F-62660 Beuvry les Bethune (FR)
(74) Mandataire: Koch, Gustave

(56) Documents cités:
- WO-A-85/05011
- FR-A- 2 591 431
- FR-A- 2 591 432
- FR-A- 2 591 433

## Description

La présente invention se rapporte à un nouveau procédé pour conférer des aptitudes fromagères à des laits traités ou devant être traités thermiquement, dans des conditions de température excédant 78°C, en vue de la fabrication de fromages emprésurés.

Dans le cadre de l'invention on entend par fromages emprésurés, conformément à la classification donnée dans l'ouvrage "LE FROMAGE", coordonné par André ECK, Technique et Documentation (Lavoisier) PARIS (1984), notamment pages 220-221, l'ensemble des fromages obtenus à partir des caillés résultant de l'action d'enzymes coagulantes. Il s'agit plus précisément de fromages du type pâte molle (Camembert, Carré de l'Est, Brie, Munster...) pâte pressée cuite (Gruyère, Emmental, Comté, Beaufort, Grana...) pâte pressée non cuite ou semi-cuite (Port-Salut, Tomme, Cantal, Gouda, Edam, Tilsit, Saint-Paulin, Reblochon, Morbier, Cheddar...) et pâte persillée (Bleu Danois, de Bavière, de Gex, de Bresse, Fourmes, Gorgonzola, Stilton, Roquefort...).

On entend généralement par "aptitudes fromagères d'un lait", selon le livre "LE FROMAGE" de André ECK cité plus haut, pages 149 à 157, son aptitude à donner subséquemment, par exemple à l'action de la présure, un coagulum :
- qui soit suffisamment ferme pour permettre le bon déroulement des opérations mécaniques habituelles des procédés conventionnels de fabrication des fromages comme le découpage, le brassage, le moulage et ce dans les temps technologiques traditionnellement requis,
- qui soit suffisamment peu friable pour éviter l'entraînement des fines par le lactosérum lors de l'égouttage, les fines étant constituées pour l'essentiel de matières protéiques ou de matières grasses,
- qui s'égoutte correctement de façon à donner un caillé puis un fromage dont la teneur en matière 5 sèche soit compatible avec les caractéristiques requises pour le fromage fabriqué.

Les procédés décrits dans les brevets français FR-A-2591432 et FR-A-2 591433 mettent en oeuvre des laits ayant été soumis à un traitement thermique à une température qui n'est pas supérieure à 78°C et prévoient l'acidification contrôlée de ces laits jusqu'au pH d'emprésurage à l'aide d'un agent acidogène, notamment la gluconodeltalactone.

Il est connu que le traitement des laits de fromagerie à des températures supérieures à 78°C peut permettre une augmentation du rendement fromager et qu'il est intéressant pour des raisons d'hygiène, de pouvoir traiter les laits à de telles températures (Michael P. Doyle et coll., Applied and Environmental Microbiology, juillet 1987, pages 1433-1438 : "Survival of Listeria monocytogenes in Milk during High-Temperature, Short-Time Pasteurization").

Cette augmentation du rendement résulte de la coprécipitation des protéines solubles avec les micelles de caséines selon le processus décrit ci-après.

Or il est bien connu que les traitements thermiques, notamment au-dessus de 78°C, sont néfastes à l'aptitude du lait à se transformer en fromage. En effet, le chauffage d'un lait à une température supérieure à 78°C (température extrême des traitements thermiques conventionnels des laits) entraîne deux phénomènes essentiels :
1° Une interaction entre les protéines du sérum (alpha lactalbumine et bêta lactoglobuline) et les caséines par liaisons hydrophobes et surtout par une activation des groupes sulfhydryles SH qui sont à l'origine de la.formation d'un complexe entre la bêta lactoglobuline et la caséine K (Kappa), complexe dont l'encombrement stérique est tel qu'il s'oppose à l'action de la chymosine, enzyme coagulante.
   Il en résulte que la coagulation s'effectue plus difficilement et de façon générale, plus lentement que normalement, ce qui se traduit en pratique par :
   - une augmentation du temps de prise,
   - une augmentation du temps de durcissement, c'est-à-dire du temps nécessaire pour obtenir une fermeté de référence du coagulum.
2° Une diminution sensible de la concentration en calcium soluble, ce qui rend plus difficile la création des liaisons entre micelles lors de la formation et du durcissement du gel.

Le gel sera donc généralement plus fragile (plus friable) ce qui entraînera notamment une augmentation de pertes de matières (fines) dans le sérum lors du travail du caillé.

Il a déjà été tenté de supprimer les inconvénients susmentionnés en appliquant différentes corrections aux laits ainsi traités : enrichissement en protéines, rétention des protéines de sérum par ultrafiltration (concentration totale - FETA demande de brevet WO 85 501), diminution du pH d'emprésurage, augmentation du taux de calcium soluble.

Ces tentatives ont porté notamment sur les laits ayant subi des traitements thermiques lors de leur transformation en poudre. En effet, rendre à ces laits l'intégralité de leurs aptitudes fromagères après reconstitution permettrait de les utiliser plus largement en fromagerie et de répondre ainsi à certaines exigences de rationalisation en matière de production de lait ou encore de se départir de certaines contraintes climatiques.

Cependant, force est de constater que les corrections envisagées pour restaurer les aptitudes fromagères de ces laits reconstitués ont leurs limites et n'ont pas permis de satisfaire à toutes les exigences fromagères, en particulier en raison de pertes de matière dans le sérum et de difficultés d'égouttage. De fait, l'utilisation de lait reconstitué à partir de poudre de lait pour obtenir des fabrications fromagères traditionnelles n'a pu être réalisée, quand cela était possible, que grâce à certaines techniques particulières telles que notamment la technique connue sous la dénomination "Coagulation Instantanée Simplifiée" (procédé CIS), différentes des procédés traditionnels se rapportant à la fabrication de fromages emprésurés.

En outre, il est connu que les fromagers ont utilisé un certain nombre de ces moyens pour corriger l'aptitude fromagère médiocre de certains laits utilisés en fromagerie traditionnelle, afin d'obtenir un coagulum fromageable [Amram Y. et coll., Rev. Lait. Fr. (1982) 404, 53-57 et Ichilczyk-Leone Y. et coll., Rev. Lait. Fr. (1981) 401, 7].

Cependant on peut constater que les corrections envisagées n'ont pas permis, à l'heure actuelle, de restaurer les aptitudes fromagères de laits chauffés à température élevée (supérieure à 78°C) sans inconvénients majeurs, ou sans faire appel à des techniques de fabrication non traditionnelles, ce qui excluait d'avoir recours à de tels traitements thermiques des laits pour augmenter les rendements dans les technologies traditionnelles.

Dans ce contexte d'autres moyens ont donc été utilisés jusqu'à présent pour augmenter les rendements : récupération des protéines du lactosérum par ultrafiltration ou par précipitation thermique avec réintroduction dans le lait ou le caillé.

Toutefois si certains résultats ont pu être atteints, notamment sur des laits traités à une température supérieure à 78°C, la surconcentration protéique rend difficile la fabrication des fromages emprésurés traditionnels.

Il est d'ailleurs connu en technologie traditionnelle que l'augmentation de la concentration en protéines d'un lait soit par ultrafiltration, soit simplement par addition de certaines protéines laitières, permet d'améliorer la fermeté des gels. Néanmoins ceci se fait généralement au détriment de la vitesse de coagulation du lait, avec augmentation des temps de prise, et l'égouttage du coagulum devient plus difficile.

Il est aussi connu que l'abaissement du pH d'emprésurage permet, en diminuant la stabilité des micelles de caséine, d'augmenter la vitesse de coagulation et la fermeté des coagulums. Toutefois, les critères propres aux fabrications fromagères habituelles n'autorisent pas des valeurs de pH d'emprésurage très inférieures aux normes conventionnelles. En effet, une telle modification ne serait pas sans conséquence importante sur la qualité des produits obtenus, notamment du fait d'une déminéralisation excessive du caillé. De plus, une baisse excessive du pH d'emprésurage augmente la friabilité des gels qui, lors du travail en cuve, entraîne des pertes importantes de matière dans le sérum d'égouttage.

Il est également connu à ce propos que l'addition de sels de calcium et en particulier de chlorure de calcium (CaCl₂) permet de diminuer le temps de prise et d'augmenter la vitesse de raffermissement du coagulum. Toutefois, un apport trop important de CaCl₂ a des incidences négatives sur les qualités organoleptiques des fromages, notamment par une augmentation néfaste de l'amertume, [Charles ALAIS, "Science du Lait", (1984) pages 647 et 669]. Il est donc nécessaire de limiter l'apport de CaCl₂, mais alors cette correction de pratique courante n'est pas toujours suffisante pour éliminer les inconvénients susmentionnés.

On peut donc constater que les corrections envisagées n'ont pas permis jusqu'à présent de restaurer les aptitudes fromagères de laits chauffés à température élevée (supérieure à 78°C) sans inconvénients majeurs, ou sans faire appel à des techniques de fabrication non traditionnelles.

En conclusion, aucune des solutions existantes ne permet de pallier toutes les difficultés inhérentes à l'utilisation des laits traités à des températures élevées et d'obtenir avec ces laits, en technologie fromagère traditionnelle, tout en bénéficiant des avantages liés à leur emploi, des fromages, et plus précisément des fromages emprésurés, dont les caractéristiques correspondraient en tous points à celles des fromages fabriqués à partir de laits traités thermiquement de manière conventionnelle.

L'invention a donc pour but de remédier aux inconvénients de l'art antérieur et de fournir un nouveau procédé pour conférer des aptitudes fromagères à des laits traités ou devant être traités thermiquement dans des conditions de température excédant 78°C, en vue de la fabrication de fromages emprésurés, sans faire appel à de nouvelles technologies fromagères.

La Société Demanderesse a eu le mérite de constater que, de façon surprenante, l'addition à ces laits d'un agent acidogène permettait de leur conférer des aptitudes fromagères et ce sans affecter de façon défavorable les étapes ultérieures de la fabrication des fromages emprésurés (maturation, emprésurage, coagulation, découpage, brassage, affinage..., voire éventuellement pressage, chauffage, cheddarisation,...) et les caractères organoleptiques des produits obtenus.

L'invention a donc pour objet un procédé pour conférer des aptitudes fromagères à un lait traité ou devant être traité thermiquement à plus de 78°C et destiné à la fabrication de fromages emprésurés, caractérisé par le fait qu'il consiste à ajouter au lait, avant ou après ledit traitement thermique, une quantité efficace d'agent acidogène.

L'amélioration apportée par l'addition d'agent acidogène au lait, traité ou devant être traité permet, en particulier, d'augmenter de manière sensible le rendement fromager, avantage économique hautement apprécié de l'homme du métier.

Le lait mis en oeuvre selon l'invention, est un lait non reconstitué de toute origine, cru ou ayant subi un traitement thermique préalable à une température n'excédant pas 78°C et éventuellement standardisé en matière grasse et/ou en matière protéique et/ou en matière minérale, voire concentré par tous moyens appropriés, notamment par ultrafiltration.

Selon l'invention, le traitement thermique du lait à plus de 78°C est choisi de préférence dans le groupe se composant des traitements thermiques à des températures comprises entre 78°C et 110°C, notamment entre 80 et 90°C, la durée de ce traitement étant généralement de quelques secondes à une minute. Il peut s'agir en particulier d'un traitement de type pasteurisation d'une durée habituelle de 15 à 40 secondes, selon le temps de chambrage spécifique à chaque unité de fabrication.

Par agent acidogène, on comprend ici toute substance capable de générer progressivement un acide dans le lait soit par solubilisation, soit par libération.

Parmi les substances capables de générer progressivement un acide dans le lait par solubilisation figurent notamment les lactones telles que les gluconolactones et les glucoheptonolactones et similaires et/ou leurs mélanges qui, en milieu aqueux, s'hydrolysent progressivement en l'acide correspondant.

Parmi les substances capables de générer progressivement un acide dans le lait par libération figurent par exemple les acides fixés sur support à solubilisation ou délitement retardé.

L'apport d'agent acidogène peut être effectué indifféremment sous la forme de poudre ou sous la forme d'une solution.

Dans le cas où l'agent acidogène est ajouté sous la forme pulvérulente, sa dispersion dans le lait et sa solubilisation sont assurées par tout moyen d'agitation approprié.

Dans le cas où il est préféré d'apporter cet agent acidogène sous la forme d'une solution, à savoir une solution dans de l'eau ou du lait, celle-ci est avantageusement préparée au moment de l'emploi afin de préserver le caractère acidogène de l'agent tel que défini plus haut.

Dans la pratique, et compte tenu des particularités propres à chaque ligne de fabrication de fromages emprésurés, le technicien déterminera le meilleur moment pour introduire l'agent acidogène dans le lait avant la coagulation.

A titre indicatif, l'agent acidogène pourra être introduit :
- dans le lait cru,
- avant ou après un premier traitement éventuel de pasteurisation,
- avant ou après le traitement thermique au sens de l'invention, c'est-à-dire à plus de 78°C.

Il va de soi que d'autres variantes pourraient être envisagées.

Toutefois, il semble qu'en règle générale, il soit préférable d'introduire l'agent acidogène dans le lait après le traitement thermique à plus de 78°C.

Avantageusement, la quantité d'agent acidogène mise en oeuvre dans le cadre de l'invention est de 3 à 500 g/hl de lait. De préférence, elle est comprise entre 5 et 200 g/hl de lait et de préférence encore entre 10 et 100 g/hl de lait.

Dans certains cas, on préfèrera choisir une dose d'agent acidogène telle qu'après hydrolyse de cet agent, le lait soit au pH requis pour l'emprésurage. Une telle pratique permet le remplacement des ferments lactiques à rôle acidifiant lors de la phase de maturation du lait et de fait une parfaite maîtrise du pH durant cette maturation. Il est possible d'allier à la fois les avantages découlant de l'utilisation en fromagerie des laits traités thermiquement au sens de l'invention et ceux résultant de cette substitution des ferments lactiques qui se traduit par une amélioration des possibilités d'automatisation des lignes de production des fromages emprésurés.

L'agent acidogène utilisé de préférence dans le cadre de l'invention est la glucono-delta-lactone (GDL). Outre les avantages précités des agents acidogènes, son excellente solubilité dans les milieux aqueux et sa cinétique d'hydrolyse contrôlée la rendent parfaitement adaptée aux exigences propres à la fabrication des fromages emprésurés. De plus, la Société Demanderesse a constaté que, de façon surprenante, on ne retrouve pratiquement plus, dans les produits finis, d'acide gluconique résultant de l'hydrolyse de la GDL.

Enfin, selon l'invention les laits utilisés peuvent être additionnés, en plus de l'agent acidogène, d'autres ajouts, notamment en vue d'une standardisation de ces laits tant en protéines qu'en matières minérales comme par exemple le calcium.

En tout état de cause, l'invention pourra être encore mieux comprise à l'aide des exemples qui suivent et qui sont relatifs à des modes de réalisation avantageux.

L'aptitude fromagère des laits peut être évaluée par divers instruments mesurant la formation et l'évolution des gels au cours de la coagulation [ Etude de l'INSTITUT DU GRUYERE (étude I.T.G. ZO 84.01B)]. Parmi ceux-ci on peut citer le dispositif commercialisé sous la dénomination FORMAGRAPH (par la société FOSS ELECTRIC) utilisé dans différents laboratoires de recherche ou écoles de laiterie. Ce type d'appareillage permet de déterminer si la fermeté du coagulum est suffisante pour satisfaire aux exigences d'une fabrication fromagère traditionnelle.

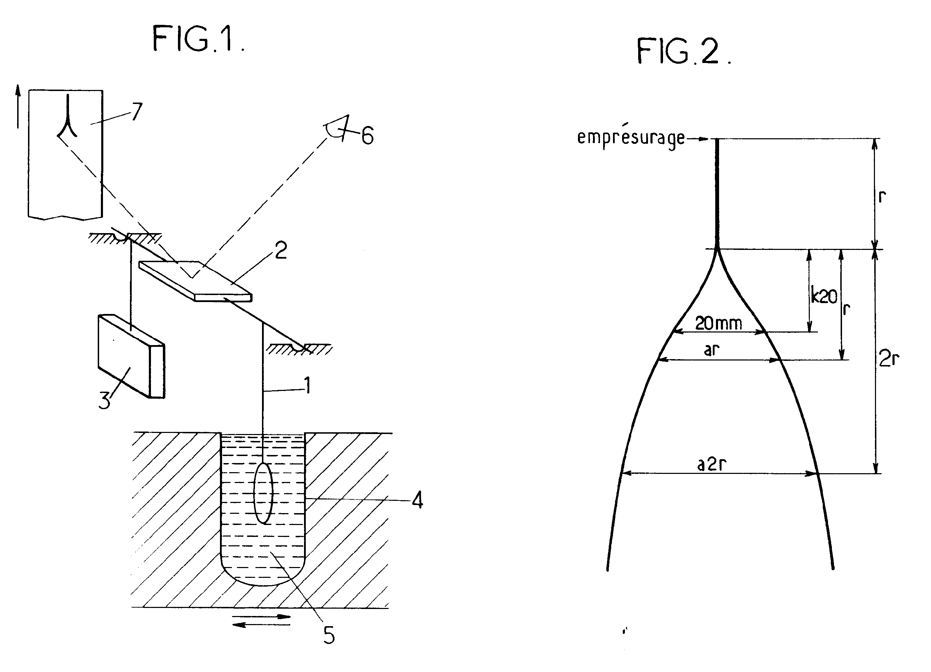

Les données pratiques concernant ce type d'appareil figurent dans l'étude I.T.G. Z0 84.01 B citée ci-dessus. Le principe de son utilisation est représenté de façon schématique à la figure 1 de la planche annexée.

Un balancier 1 relié à un miroir 2 et équilibré par un contrepoids 3 est plongé dans une micro-cuve 4 (10 ml) contenant le lait 5 dont on veut évaluer l'aptitude fromagère.

La micro-cuve 4 est soumise à un mouvement horizontal de va-et-vient. Lorsque le lait coagule, le balancier 1 est entraîné par le gel en formation. Un éclair lumineux 6 est envoyé sur le miroir 2 au terme de chaque déplacement horizontal de la micro-cuve 4, permettant ainsi d'enregistrer sur un papier photosensible 7 l'oscillation du balancier 1 au fur et à mesure de la coagulation du lait.

Le tracé obtenu représenté à la figure 2 de la planche annexée permet de caractériser l'aptitude fromagère d'un lait principalement par :
- r :: temps de coagulation (corrélé avec le temps de prise), mesuré en mm ;
- ar: : écartement en mm entre les deux branches du graphe après une fois r (1 X r) ;
- a2r: : écartement après 2 X r ;
- k20: : temps nécessaire pour que l'écartement des branches atteigne 20 mm.

r et k20 sont le reflet de la vitesse de coagulation, ar et a2r traduisent la fermeté du gel.

A titre indicatif et selon les technologies, de bonnes aptitudes fromagères pour un lait peuvent être caractérisées par les paramètres suivants :
- pour un temps de coagulation long :
   - r: = 35 à 40 mm,
   - k20: = 20 à 30 mm,
   - ar: > 30 mm,
   - a2r: > 40 mm;
- pour un temps de coagulation court :
   - r: = 20 à 35 mm,
   - k20: = 12 à 20 mm,
   - ar: > 29 mm,
   - a2r: > 38 mm.

Dans les exemples qui suivent, les valeurs de r, k20, ar et a2r sont données en mm.

### EXEMPLE 1 (témoin)

### Aptitude fromagère d'un lait traité à 85°C pendant 20 secondes.

Un lait cru de grand mélange est pasteurisé à 85°C pendant 20 secondes puis refroidi à 10°C, standardisé à 30 g/l de matières grasses et à 34 g/l de matières azotées protéiques et complémenté par une addition de 0,075 g/l de CaCl₂ anhydre.

On ajoute au lait ainsi traité (jour J-1) des bactéries lactiques en quantité suffisante. Après une maturation de 16 H à 13°C, on obtient, à l'emprésurage, un pH de 6,45.

Le lait est ensuite repris le jour J, réchauffé à 38°C (température d'emprésurage) et additionné de 0,035 g de CaCl₂ anhydre. L'emprésurage est réalisé par addition de présure à 520 mg/l de chymosine active (marque BOLL) diluée à 2,5 %, à une dose équivalente à 25 ml d'extrait de présure pour 100 litres de lait.

La coagulation est suivie au FORMAGRAPH (commercialisé par la société FOSS ELECTRIC) et donne les résultats suivants :
pH d'emprésurage : 6,45
- r: = 43
- k20: = 33
- ar: = 25
- a2r: = 37.

Les paramètres de coagulation correspondent à une fabrication de type pâte stabilisée.

On constate que le gel est obtenu trop lentement et que sa fermeté ne permet pas l'obtention d'un caillé normal (trop mou).

Le lait de départ n'a donc pas les aptitudes fromagères suffisantes pour fabriquer des produits dans cette technologie.

### EXEMPLE 2

### Correction de l'aptitude fromagère d'un lait traité a 85°C pendant 20 secondes, par addition de glucono-delta-lactone.

Le même lait cru de grand mélange que celui utilisé dans l'exemple 1, traité de même à 85°C pendant 20 secondes est utilisé pour cette expérimentation. Ce lait identique à celui de l'exemple 1 a donc été standardisé à 30 g/l de matières grasses et à 34 g/l de matières azotées protéiques et complémenté par une addition de 0,075 g/l de CaCl₂. Le lait ainsi standardisé est refroidi à 10°C.

Contrairement à l'exemple 1, on n'ajoute pas de bactéries lactiques dans ce lait standardisé, mais on ajoute 0,38 g de glucono-delta-lactone par litre de lait mis en oeuvre, ce qui permet d'atteindre le lendemain un pH à l'emprésurage de 6,45.

Le lait ainsi préparé est repris le jour J, réchauffé à 38°C (température d'emprésurage) et additionné de 0,035 g de CaCl₂ anhydre. L'emprésurage est réalisé comme dans l'exemple 1, par addition de présure à 520 mg/l de chymosine active (marque BOLL) diluée à 2,5 %, à une dose équivalente à 25 ml d'extrait de présure pour 100 litres de lait.

La coagulation est suivie au FORMAGRAPH (FOSS ELECTRIC) et donne les résultats suivants :
pH d'emprésurage : 6,45
- r: = 39,0
- k20: = 27,5
- ar: = 30,0
- a2r: = 40,5.

On constate que dans ce cas le gel obtenu présente des aptitudes fromagères améliorées qui permettent d'effectuer la coagulation dans les conditions normales de fabrication. La glucono-delta-lactone a donc permis de restaurer l'aptitude fromagère de ces laits pour atteindre un niveau de performance suffisant pour permettre la fabrication fromagère.

### EXEMPLE 3

### Correction de l'aptitude fromagère d'un lait standardisé en protéines par addition de GDL.

Un lait cru de grand mélange est pasteurisé à 85°C pendant 20 secondes puis refroidi à 10°C, standardisé à 30 g/l de matières de grasses et à 33 g/l de matières azotées protéiques par ajout de 3 g/l de caséinate de Ca et complémenté par une addition de 0,075 g/l de CaCl₂ anhydre et de 0,40 g de glucono-delta-lactone par litre de lait mis en oeuvre.

Le lait ainsi traité est stocké pendant une nuit à 10°C (jour J-1). La quantité de GDL mise en oeuvre permet d'obtenir, à partir du lait de départ à pH de 6,75, le pH d'emprésurage de 6,44.

Le lait est repris le jour J, réchauffé à 35°C (température d'emprésurage) et additionné de 0,035 g de CaCl₂ anhydre par litre de lait et de présure à 520 mg/l de chymosine active (marque BOLL) diluée à 2,5 %, à une dose équivalente à 25 ml d'extrait de présure pour 100 litres de lait.

La coagulation est suivie au FORMAGRAPH (FOSS ELECTRIC) et donne les résultats suivants :
- r: = 32,0
- k20: = 17,0
- ar: = 32,0
- a2r: = 43,0.

Ceci correspond à un coagulum fromageable par exemple en technique de pâte stabilisée (ou pâtes solubilisées de type Tomme Blanche).

### EXEMPLE 4

### Correction de l'aptitude fromagère d'un lait traité à 82°C par addition de GDL.

Un lait cru de grand mélange est pasteurisé à 82°C pendant 20 secondes puis refroidi à 10°C, standardisé à 30 g/l de matières grasses et à 32,5 g/l de matières azotées protéiques et complémenté par une addition de 0,075 g/l de CaCl₂ anhydre et de 0,22 g de glucono-delta-lactone par litre de lait mis en oeuvre.

Le lait ainsi traité est stocké (jour J-1) pendant 1 nuit à 10°C. La quantité de GDL mise en oeuvre permet d'obtenir le pH d'emprésurage de 6,50.

Le lait est repris le jour J, réchauffé à 35°C (température d'emprésurage) et additionné de 0,035 g de CaCl₂ anhydre par litre de lait et de présure à 520 mg/l de chymosine active (marque BOLL) diluée à 2,5 %, à une dose équivalente à 25 ml d'extrait de présure pour 100 litres de lait.

La coagulation est suivie au FORMAGRAPH (FOSS ELECTRIC) et donne les résultats suivants :
- r: = 35,0
- k20: = 22,5
- ar: = 31,0
- a2r: = 42,0.

Ceci correspond à un coagulum fromageable, par exemple en technique de pâte pressée stabilisée, de type Tomme à croûte fleurie.

### EXEMPLE 5

### Correction de l'aptitude fromagère d'un lait traité à 85°C en vue de sa transformation en fromage de type pâte pressée.

Un lait cru de grand mélange est pasteurisé à 85°C pendant 20 secondes puis refroidi à 10°C, standardisé à 30 g/l de matières grasses et à 34,5 g/l de matières azotées protéiques et complémenté par une addition de 0,125 g/l de CaCl₂ anhydre et de 0,24 g de glucono-delta-lactone par litre de lait mis en oeuvre.

Le lait ainsi traité est stocké (pour J-1) pendant 1 nuit à 10°C. La quantité de GDL mise en oeuvre permet d'obtenir le pH d'emprésurage de 6,50.

Le lait est repris le jour J, réchauffé à 33°C (température d'emprésurage) et additionné de 0,035 g de CaCl₂ anhydre par litre de lait et de présure à 520 mg/l de chymosine active (marque BOLL) diluée à 2,5 %, à une dose équivalente à 25 ml d'extrait de présure pour 100 litres de lait.

La coagulation est suivie au FORMAGRAPH (FOSS ELECTRIC) et donne les résultats suivants :
- r: = 36,0
- k20: = 21,0
- ar: = 34,0
- a2r: = 44,5.

Ceci correspond à un coagulum fromageable, par exemple en technologie de pâte pressée non cuite de type Saint-Paulin.

### EXEMPLE 6

### Aptitude fromagère d'un lait traité à 85°C pendant 20 secondes avec addition de GDL avant ce traitement thermique.

A un lait cru de grand mélange de pH = 6,78, on ajoute 0,20 g/l de glucono-delta-lactone de façon à obtenir ultérieurement à l'emprésurage un pH de 6,50.

Ce lait est ensuite traité à 85°C pendant 20 secondes puis refroidi à 10°C, standardisé à 30 g/l de matières grasses et à 34,5 g/l de matières azotées protéiques et complémenté par 0,075 g/l de CaCl₂ anhydre.

Le lait ainsi traité est stocké (jour J-1) pendant 1 nuit à 10°C.

Le lait est repris le jour J, réchauffé à 33°C (température d'emprésurage) et additionné de 0,035 g de CaCl₂ anhydre. La coagulation est réalisée par addition de présure à 520 mg/l de chymosine active (marque BOLL) diluée à 2,5 %, à une dose équivalente à 35 ml d'extrait de présure pour 100 litres de lait.

La coagulation est suivie au FORMAGRAPH (FOSS ELECTRIC) et donne les résultats suivants :
- r: = 23,0
- k20: = 18,0
- ar: = 29,0
- a2r: = 43,5.

Ces résultats correspondent à un coagulum fromageable pour des technologies de fabrication de type pâte pressée semi-cuite (type Edam).

### EXEMPLE 7

### Correction de l'aptitude fromagère d'un lait traité à 85°C pendant 20 secondes sans maturation à basse température.

Un lait cru de grand mélange est stocké à 4°C pendant 5 h. Ce lait est ensuite traité à 85°C pendant 20 secondes puis standardisé à 33 g/l de matières grasses et à 34 g/l de matières azotées protéiques. Le lait ainsi traité est refroidi à 32°C (température d'emprésurage) et complémenté par une addition de 0,15 g/l de CaCl₂ anhydre et de 2 g de glucono-delta-lactone par litre de lait mis en oeuvre.

Lorsque le pH atteint 6,55 (quelques minutes après l'introduction de la GDL), l'emprésurage est réalisé par addition de présure à 520 mg/l de chymosine active (marque BOLL) diluée à 2,5 %, à une dose équivalente à 40 ml d'extrait de présure pour 100 litres de lait.

La coagulation est suivie au FORMAGRAPH (FOSS ELECTRIC) et donne les résultats suivants :
- r: = 21,0
- k20: = 15,0
- ar: = 35,5
- a2r: = 44,0.

Ces résultats montrent que le gel obtenu est de bonne qualité. Ceci correspond à la restauration des aptitudes fromagères d'un lait traité à 85°C pendant 20 secondes pour la fabrication de fromages de type Cheddar.

### EXEMPLE 8 (comparatif)

### Fabrication d'un fromage à pâte pressée à partir d'un lait traité à 72°C pendant 20 secondes (selon la technologie traditionnelle).

Un lait cru de grand mélange est traité à 72°C pendant 20 secondes puis refroidi à 10°C. Ce lait est standardisé à 32,5 g/l de matière grasse et à 36 g/l de matières azotées protéiques et complémenté par une addition de 0,20 g/l de CaCl₂ anhydre et de 0,10 g de glucono-delta-lactone par litre de lait mis en oeuvre.

Ce lait est stocké (jour J-1) à 10°C pendant 15 heures puis on y ajoute (jour J) des ferments lactiques mésophiles (MAO14 - EUROZYME) qui assureront l'acidification en fabrication. Le réchauffage du lait à 32°C (température d'emprésurage) est effectué 2 heures après l'addition des ferments. L'emprésurage est réalisé par addition de la même présure que dans les autres exemples, à une dose de 30 ml/100 litres de lait ; le pH est alors de 6,58.

Le temps de prise est de 16 minutes, le temps de durcissement de 10 minutes, puis le gel est découpé.

A ce stade, le gel est suffisamment ferme pour permettre le déroulement normal de la fabrication fromagère.

Celle-ci se poursuit selon la technologie habituelle des fromages à pâte pressée :
- brassage,
- premier soutirage du sérum,
- délactosage,
- second soutirage du sérum,
- vidange de la cuve,
- prépressage,
- moulage,
- pressage,
- acidification,
- salage en saumure,
- ressuyage,
- affinage.

Le fromage obtenu a les caractéristiques suivantes :
- extrait sec : 51,6 %,
- teneur en matière grasse (sur extrait sec) : 46,5 %,
- rendement* : 13,39 kg de fromage/100 kg de lait.

* Rendement corrigé à extrait sec standard (rendement MAUBOIS).

Ceci correspond aux valeurs normales pour un fromage de type pâte pressée. Le produit obtenu présente les qualités organoleptiques habituelles, caractéristiques de ce fromage.

### EXEMPLE 9

### Fabrication d'un fromage à pâte pressée à partir d'un lait traité à 85°C pendant 20 secondes.

Un lait cru de grand mélange est traité à 85°C pendant 20 secondes puis refroidi à 10°C. Ce lait est standardisé à 32,5 g/l de matière grasse et à 36 g/l de matières azotées protéiques et complémenté par une addition de 0,20 g/l de CaCl₂ anhydre et de 0,12 g de glucono-delta-lactone par litre de lait mis en oeuvre.

Ce lait est stocké (jour J-1) à 10°C pendant 15 heures puis on y ajoute (jour J) des ferments lactiques mésophiles (MAO14 - EUROZYME) qui assureront l'acidification en fabrication. Le réchauffage du lait à 32°C (température d'emprésurage) est effectué 2 heures après l'addition des ferments. L'emprésurage est réalisé par addition de la même présure que dans les autres exemples, à une dose de 30 ml/100 litres de lait ; le pH est alors de 6,53.

Le temps de prise est de 15 minutes, le temps de durcissement de 10 minutes, puis le gel est découpé.

A ce stade, le gel est suffisamment ferme pour permettre le déroulement normal de la fabrication fromagère.

Celle-ci se poursuit selon la technologie habituelle des fromages à pâte pressée :
- brassage,
- premier soutirage du sérum,
- délactosage,
- second soutirage du sérum,
- vidange de la cuve,
- prépressage,
- moulage,
- pressage,
- acidification,
- salage en saumure,
- ressuyage,
- affinage.

Le fromage obtenu a les caractéristiques suivantes :
- extrait sec : 51,5 %,
- teneur en matière grasse (sur extrait sec) : 47 %,
- rendement* : 13,73 kg de fromage/100 kg de lait.

* Le rendement corrigé à extrait standard est supérieur à celui de la fabrication de l'exemple 8. L'augmentation est d'environ + 2,5 % pour cette fabrication.

Ceci correspond aux valeurs normales pour un fromage de type pâte pressée. Le produit obtenu présente de bonnes qualités organoleptiques, similaires à celles du produit fabriqué habituellement.

## Revendications

1. Procédé pour conférer des aptitudes fromagères à un lait traité ou devant être traité thermiquement à plus de 78°C et destiné à la fabrication de fromages emprésurés, caractérisé par le fait qu'il consiste à ajouter au lait, avant ou après ledit traitement thermique, une quantité efficace d'agent acidogène.

2. Procédé selon la revendication 1, caractérisé par le fait que les traitements thermiques des laits à plus de 78°C sont choisis dans le groupe se composant des traitements thermiques à des températures comprises entre 78°C et 110°C, de préférence entre 80 et 90°C.

3. Procédé selon la revendication 1 ou 2, caractérisé par le fait que la durée du traitement thermique à plus de 78°C est de quelques secondes à une minute.

4. Procédé selon l'une des revendications 1 à 3, caractérisé par le fait que l'agent acidogène est ajouté au lait après le traitement thermique à plus de 78°C.

5. Procédé selon l'une des revendications 1 à 4, caractérisé par le fait que l'agent acidogène est choisi parmi les gluconolactones et les glucoheptonolactones.

6. Procédé selon l'une de revendications 1 à 5, caractérisé par le fait que l'agent acidogène est la gluconodeltalactone (GDL).

7. Procédé selon l'une des revendications 1 à 6, caractérisé par le fait que la quantité d'agent acidogène mis en oeuvre est de 3 à 500 g/hl de lait, de préférence de 5 à 200 g/hl de lait et plus préférentiellement encore de 10 à 100 g/hl de lait.

## Claims

1. Process for conferring cheese making properties on a milk before or after its heat treatment at temperatures above 78°C, which milk is intended for the manufacture of renneted cheeses, characterized by the fact that it comprises adding an effective quantity of acidogenic agent to the milk before or after the said heat treatment.

2. Process according to claim 1, characterized by the fact that the heat treatments of milks at temperatures above 78°C are selected from the group comprising heat treatments at temperatures from 78°C to 110°C, preferably from 80 to 90°C.

3. Process according to claim 1 or 2, characterized by the fact that the duration of the heat treatment at temperatures above 78°C is several seconds to one minute.

4. Process according to one of claims 1 to 3, characterized by the fact that the acidogenic agent is added to the milk after the heat treatment carried out at temperatures above 78°C.

5. Process according to one of claims 1 to 4, characterized by the fact that the acidogenic agent is selected from the group comprising gluconolactones and glucoheptonolactones.

6. Process according to one of claims 1 to 5, characterized by the fact that the acidogenic agent is glucono-delta-lactone (GDL).

7. Process according to one of claims 1 to 6, characterized by the fact that the quantity of acidogenic agent used is from 3 to 500 g/hl of milk, preferably from 5 to 200 g/hl of milk and still more preferably from 10 to 100 g/hl of milk.

## Patentansprüche

1. Verfahren, um eine Milch, welche einer Wärmebehandlung bei einer Temperatur von über 78° C unterworfen worden ist oder welche einer solchen Wärmebehandlung unterworfen werden soll und welche für die Herstellung von eingelabten Käsen bestimmt ist, für eben diese Käseherstellung geeignet zu machen, dadurch gekennzeichnet, daß dieses Verfahren darin besteht, daß man zu der Milch, vor oder nach der genannten Wärmebehandlung, eine wirksame Menge eines azidogenen Mittels hinzufügt.

2. Verfahren nach Anspruch 1, dadurch gekennzeichnet, daß die Wärmebehandlungen der Milch bei einer Temperatur von über 78° C aus einer Gruppe ausgewählt sind, welche aus Wärmebehandlungen bei Temperaturen zwischen 78° C und 110° C, vorzugsweise zwischen 80 und 90° C, besteht.

3. Verfahren nach Anspruh 1 oder 2, dadurch gekennzeichnet, daß die Dauer der Wärmebehandlung bei einer Temperatur von über 78° C von einigen Sekunden bis zu 1 Minute beträgt.

4. Verfahren nach einem der Ansprüche 1 bis 3, dadurch gekennzeichnet, daß das azidogene Mittel der Milch nach der Wärmebehandlung bei einer Temperatur von über 78° C zugegeben wird.

5. Verfahren nach einem der Ansprüche 1 bis 4, dadurch gekennzeichnet, daß das azidogene Mittel aus Gluconolactonen und Glucoheptonolactonen ausgewählt wird.

6. Verfahren nach einem der Ansprüche 1 bis 5, dadurch gekennzeichnet, daß das azidogene Mittel Gluconedeltalacton (GDL) ist.

7. Verfahren nach einem der Ansprüche 1 bis 6, dadurch gekennzeichnet, daß die Menge des eingesetzten azidogenen Mittels 3 bis 500 g/hl Milch, vorzugsweise 5 bis 200 g/hl Milch und in höchstem Maße bevorzugt 10 bis 100 g/hl Milch beträgt.
